# EUROPEAN PATENT SPECIFICATION

(11) **EP 1 806 058 B1**
(45) Date of publication and mention of the grant of the patent: **22.04.2009**
(21) Application number: 06256462.0
(22) Date of filing: 20.12.2006
(51) Int. Cl.: A23L 1/221, A23L 1/226, A23L 1/22

(54) **Use of decalepis hamiltonii in flavor compositions**
Verwendung von Decalepis hamiltonii in Aromazubereitung
Utilisation de decalepis hamiltonii dans des compositions aromatisantes

(30) Priority: 10.01.2006 US 329006
(43) Date of publication of application: 11.07.2007
(73) Proprietor: International Flavors & Fragrances, Inc., New York New York 10019 (US)
(72) Inventor: John, Thumpalasseril V., Morganville New Jersey 07751 (US); Gunasekar, Muthusamy, Annanagar West Chennai 600101 (IN); Conklin, Garry, Pequannock New Jersey 07440 (US); Dewis, Mark Lawrence, Matawan New Jersey 07747 (US)
(74) Representative: Lawrence, John

(56) References cited:
- US-A- 2 284 287
- US-A- 3 385 713
- GIRIDHAR P ET AL: "Improvement of growth and root specific flavour compound 2-hydroxy-4-methoxy benzaldehyde of micropropagated plants of Decalepis hamiltonii Wight & Arn., under triacontanol treatment" SCIENTIA HORTICULTURAE, ELSEVIER SCIENCE PUBLISHERS, XX, vol. 106, no. 2, 1 September 2005 (2005-09-01), pages 228-236, XP004981636 ISSN: 0304-4238

## Description

### Field of the Invention

The use of *Decalepis hamiltonii* extract and constituent chemicals are disclosed as flavor chemicals suitable for incorporation in food products, most preferably when used in combination with vanilla and related applications.

### Background of the Invention

Vanilla is one of the most common flavors used in commerce throughout the world. As a natural material, vanilla prices can be subject to major price swings due to supply and demand and the inherent uncertainty associated with crops. The price of vanilla can greatly vary due to numerous factors which influence crops yields such as insect damage, adverse weather conditions and plant diseases.

The flavor of natural vanilla extract is due to the numerous aromatic compounds produced during curing and extraction, among which vanillin is the most abundant. The other major vanillin phenolics that are responsible for the flavor are believed to be p-hydroxy benzaldehyde, p-hydroxy benzoic acid and vanillic acid. Besides these major phenolics there are large numbers of other flavor compounds that are responsible for the complex nature of natural vanilla extract/oleoresin flavor (Ref. Purseglove, J.W. et al; Vanilla, Chapter 2 in book Spices Volume 2, Longman Scientific and Technical; Harlow, U.K. 1988; 644-735)

In view of the very complex nature of the natural vanilla extract, it is very difficult to create natural vanilla extract replacement or extender materials without employing a natural vanilla extract.

There is an ongoing need to develop new materials that can be used to enhance or extend vanilla flavor while maintaining vanilla's desirable characteristics.

### Summary of the Invention

In a first embodiment, the present invention provides an organoleptically acceptable amount of Decalepis hamiltonii extraction to provide a vanilla flavor to a soy-containing food product. In a second embodiment the invention provides an organoleptically acceptable amount of 2-hydroxy-4-methoxy benzaldehyde to provide a vanilla flavor to a salf-containing food product. In a third embodiment of the invention provides an organoleptically acceptable combination of vanilla and Decalepis hamiltonii extract. In another embodiment, the present invention provides the use of an organoleptically effective amount of Decalepis hamiltonii, preferably in combination with vanilla flavoring in soy-containing food products to enhance the flavor of the food.
The present invention also contemplates the use of 2-hydroxy-4-methoxy benzaldehyde to provide a vanilla flavor in foodstuff as well as in combination with vanilla in a flavor package.
In another embodiment the present inventions employs Decalepis hamiltonii extract or 2-hydroxy-4-methoxy benzaldehyde to mask the undesirable taste notes of foods such soy-containing products.

These and other embodiments of the present invention will be apparent by reading the following specification.

### Detailed Description of the Invention

We have discovered that the use of *Decalepis hamiltonii* extract and / or 2-hydroxy-4-methoxy benzaldehyde has the ability to provide a vanilla flavor to foodstuffs, or to enhance or extend the taste of vanilla. Therefore *Decalepis hamiltonii* extract and/or 2-hydroxy-4-methoxy benzaldehyde can be used advantageously in combination to vanilla to economically enhance the desirable taste of vanilla.

*Decalepis hamiltonii* is a native Indian plant whose roots are grown commercially and available. *Decalepis hamiltonii* roots are preferably employed in the present invention to make the extract. The roots should have a moisture content of from about 1 to about 95 weight %, more preferably from about 5 to about 10 weight %. The *Decalepis hamiltonii* roots should be reduced in size, and in a preferred mode are coarsely powdered before addition to the extractor. To make the desired extract, the *Decalepis hamiltonii* roots are charged into an extractor, with the desired food-grade solvent. The solvent can be polar such as ethyl alcohol or water or a non-polar solvent such as hexane. In a preferred embodiment ethyl alcohol, is added at a solvent / *Decalepis hamiltonii* root ratio of between about 10 to about 1, preferably from about 3:1 on weight basis. The temperature of the solvent is maintained between about room temperature, about 22°-C, to about 82°-C; preferably between about 40 and about 80 °-C. To obtain higher yields of the extract, the solvent should be continuously circulated in the extractor for period of from about 1 to about 48 hours preferably about 4 to about 8 hours. At the end of the extraction time, the heating is stopped and the extract is drained and stored. The extraction is repeated for another 1 to 6 times preferably 2 to 3 times. The extracts are then combined, filtered if required, and concentrated. The concentration is done under a vacuum of 1 to 760 Torr and a temperature from room temperature to 80C preferably at a vacuum from 100 to 300 Torr and a temperature from 40 to 70°-C. When part of the ethyl alcohol is removed, propylene glycol can be added at a level of 1 to 25 weight%, preferably 2 to 10% of the original weight of the roots and then concentration of the extract is continued until required level of ethanol is reached. The extract also can be prepared without the addition of the propylene glycol.

As used herein flavor effective amount or organoleptically effective amount is understood to mean the amount of compound in flavor compositions the individual component will contribute to its particular organoleptic characteristics. The flavor effect of the flavor composition will be the sum of the effects of each of the flavor ingredients. Thus the compounds of the invention can be used to alter the taste characteristics of the flavor composition by modifying the taste reaction contributed by another ingredient in the composition. The amount will vary depending on many factors including other ingredients, their relative amounts and the effect that is desired.

The level of *Decalepis hamiltonii* extract used in flavor compositions is greater than 0.1 parts per million, generally provided at a level of from about 0.5 to about 50 parts per million in the finished food product, more preferably from about 1 parts per to about 10 parts per million. The *Decalepis hamiltonii* extract has been found to enhance the flavors at levels greater than about 0.25 parts per million, including uses to enhance the flavor of soy products such as soy milk, soy protein or soy protein extract at levels as as about 0.5 to about 10 parts per million by weight.

Another way of reporting the level of *Decalepis hamiltonii* extract is to report it as a weight ratio in combination with vanilla. The weight ratio of vanilla to *Decalepis hamiltonii* extract is from about 1:1 to about 1:100, preferably from about 10:1 to about 25:1 and most preferably at a ratio of about 25:1 in a foodstuff.

Through the work leading to this invention we have discovered that *Decalepis hamiltonii* extract is about 100 fold stronger in providing a vanilla flavor than vanilla extract. Other investigations have led us to quantify *Decalepis hamiltonii* extract as having 10 fold strength in comparison to a 20 fold vanilla bourbon concentrate.

Further investigation of the *Decalepis hamiltonii* extract lead to the discovery that the desirable flavor component of the extract was provided by 2-hydroxy-4-methoxy benzaldehyde. We have discovered that 2-hydroxy-4-methoxy benzaldehyde is present in *Decalepis hamiltonii* extract at a level of from about 2 to about 3.5 weight percent. In some circumstances it may be more desirable from a taste or cost standpoint to use 2-hydroxy-4-methoxy benzaldehyde to extend the vanilla flavor. 2-hydroxy-4-methoxy benzaldehyde is available from various sources including Aldrich Chemicals.

In a preferred embodiment the level of 2-hydroxy-4-methoxy benzaldehyde used is about at a level of greate than about 0.1 ppm, preferably from about 1 to about 5 parts per million by weight to provide a vanilla flavor. Alternatively it can be used at a level of from about 2 to 5 weight pecent of the extract level to extend the vanilla flavor.
Another way of reporting the level of 2-hydroxy-4-methoxy benzaldehyde level is to report it as a weight ratio in combination with vanilla. The weight ratio of vanilla to 2-hydroxy-4-methoxy benzaldehyde is from about 50:1 to about 20:1, most preferably at a level of from 25:1 on a weight by weight basis.

The present invention also provides for the use of both *Decalepis hamiltonii* extract and 2-hydroxy-4-methoxy benzaldehyde to enhance the vanilla flavor in a foodstuff.

The term "foodstuff" as used herein includes both solid and liquid ingestible materials for consumption by man or animals, which materials usually do, but need not, have nutritional value. Thus, foodstuffs include meats, gravies, soups, convenience foods, malt, alcoholic and other beverages, milk, yogurt, ice cream and other dairy products, confectionary products, chocolate-containing products, beverages, seafood products, including fish, crustaceans, mollusks and the like, candies, vegetables, cereals, soft drinks, snacks, dog and cat foods, other veterinary products and the like.

When the compounds of this invention are used in a flavoring composition, they can be combined with conventional flavoring materials or adjuvants. Such co-ingredients or flavor adjuvants are well known in the art for such use and have been extensively described in the literature. Requirements of such adjuvant materials are: (1) that they be non-reactive with the 2-hydroxy-4-methoxy benzaldehyde of our invention; (2) that they be organoleptically compatible with the 2-hydroxy-4-methoxy benzaldehyde derivative(s) of our invention whereby the flavor of the ultimate consumable material to which the 2-hydroxy-4-methoxy benzaldehyde are added is not detrimentally affected by the use of the adjuvant; and (3) that they be ingestibly acceptable and thus nontoxic or otherwise non-deleterious. Apart from these requirements, conventional materials can be used and broadly include other flavor materials, vehicles, stabilizers, thickeners, surface active agents, conditioners and flavor intensifiers.

Such conventional flavoring materials include saturated fatty acids, unsaturated fatty acids and amino acids; alcohols including primary and secondary alcohols, esters, carbonyl compounds including ketones (other than the 2-hydroxy-4-methoxy benzaldehyde derivatives of our invention) and aldehydes; lactones; other cyclic organic materials including benzene derivatives, alicyclic compounds, heterocyclics such as furans, pyridines, pyrazines and the like; sulfur-containing compounds including thiols, sulfides, disulfides and the like; proteins; lipids, carbohydrates; so-called flavor potentiators such as monosodium glutamate; magnesium glutamate, calcium glutamate, guanylates and inosinates; natural flavoring materials such as cocoa, vanilla and caramel; essential oils and extracts such as anise oil, clove oil and the like and artificial flavoring materials such as vanillin, ethyl vanillin and the like.

Specific preferred flavor adjuvants include but are not limited to the following: anise oil; ethyl-2-methyl butyrate; vanillin; cis-3-heptenol; cis-3-hexenol; trans-2-heptenal; butyl valerate; 2,3-diethyl pyrazine; methyl cyclo-pentenolone; benzaldehyde; valerian oil; 3,4-dimethoxyphenol;amyl acetate; amyl cinnamate; γ-butyryl lactone; furfural; trimethyl pyrazine; phenyl acetic acid; isovaleraldehyde; ethyl maltol; ethyl vanilin; ethyl valerate; ethyl butyrate; cocoa extract; coffee extract; peppermint oil; spearmint oil; clove oil; anethol; cardamom oil; wintergreen oil; cinnamic aldehyde; ethyl-2-methyl valerate; γ-hexenyl lactone; 2,4-decadienal; 2,4-heptadienal; methyl thiazole alcohol (4-methyl-5-β-hydroxyehtyl thiazole); 2-methyl butanethiol; 4-mercapto-2-butanone; 3-mercapto-2-pentanone; 1-mercapto-2-propane; benzaldehyde; furfural; furfuryl alcohol; 2-mercapto propionic acid; alkyl pyrazine; methyl pyrazine; 2-ethyl-3-methyl pyrazine; tetramethyl pyrazine; polysulfides; dipropyl disulfide; methyl benzyl disulfide; alkyl thiophene; 2,3-dimethyl thiophene; 5-methyl furfural; acetyl furan; 2,4-decadienal; guiacol; phenyl acetaldehyde; β-decalactone; d-limonene; acetoin; amyl acetate; maltol; ethyl butyrate; levulinic acid; piperonal; ethyl acetate; n-octanal; n-pentanal; n-hexanal; diacetyl; monosodium gulatamate; monopotassium glutamate; sulfur-containing amino acids, e.g., cysteine; hydrolyzed vegetable protein; 2-methylfuran-3-thiol;2-methyldihydrofuran-3-thiol; 2,5-dimethylfuran-3-thiol; hydrolyzed fish protein; tetramethyl pyrazine; propylpropenyl disulfide; propylpropenyl trisulfide; diallyl disulfide; diallyl trisulfide; dipropenyl disulfide; dipropenyl trisulfide; 4-methyl-2-[(methylthio)-ethyl]-1,3-dithiolane; 4,5-dimethyl-2-(methylthiomethyl)-1,3-dithiolne; and 4-methyl-2-(methylthiomethyl)-1,3-dithiolane. These and other flavor ingredients are provided in U.S. Patent Nos. 6,110,520 and 6,333,180 .

The method of our invention or compositions incorporating them, as mentioned above, can be combined with one or more vehicles or carriers for adding them to the particular product. Vehicles can be edible or otherwise suitable materials such as ethyl alcohol, propylene glycol, water and the like, as described supra. Carriers include materials such as gum arabic, carrageenan, xanthan gum, guar gum and the like.

The flavors of the present invention can be incorporated with the carriers by conventional means such as spray-drying, drum-drying and the like. Such carriers can also include materials for coacervating the 2-hydroxy-4-methoxy benzaldehyde of our invention to provide encapsulated products, as set forth supra. When the carrier is an emulsion, the flavoring composition can also contain emulsifiers such as mono- and diglycerides or fatty acids and the like. With these carriers or vehicles, the desired physical form of the compositions can be prepared.

The quantity of derivative(s) utilized should be sufficient to impart the desired flavor characteristic to the product, but on the other hand, the use of an excessive amount of *Decalepis hamiltonii, Decalepis hamiltonii* extract or 2-hydroxy-4-methoxy benzaldehyde is not only wasteful and uneconomical, but in some instances, too large a quantity may unbalance the flavor or other organoleptic properties of the product consumed. The quantity used will vary depending upon the ultimate foodstuff; the amount and type of flavor initially present in the foodstuff; the further process or treatment steps to which the foodstuff will be subjected; regional and other preference factors; the type of storage, if any, to which the product will be subjected; and the preconsumption treatment such as baking, frying and so on, given to the product by the ultimate consumer. Accordingly, the terminology "effective amount" and "sufficient amount" is understood in the context of the present invention to be quantitatively adequate to alter the flavor of the foodstuff. The term "organoleptically acceptable" is understood mean a level of the flavoring agents which impart an acceptable flavor to a foodstuff or other product.

The following are provided as specific embodiments of the present invention. Other modifications of this invention will be readily apparent to those skilled in the art, without departing from the scope of this invention. As used herein, both specification and following examples all percentages are weight percent unless noted to the contrary.

### Example 1

A test was conducted to evaluate the effectiveness of *Decalepis hamiltonii* extract in providing a vanilla flavor to products. The tests were conducted using a full fat vanilla yogurt containing 9 weight percent sugar.

Three products were compared:
1) a vanilla extract (5 fold), used as 2 weight percent in propylene glycol, used at 0.5 weight percent in a 0.5 weight percent in 3 weight % sugar solution;
2) a vanilla concentrate (25 fold) used as a 1 weight percent solution in propylene glycol at a level of 0.8 level in a 3 weight percent solution; and
3) a *Decalepis hamiltonii* extract was used as 0.1 weight percent level in propylene glycol and used as a 0.5 level in a 3% sugar solution.

The tests were conducted 3 days after preparation of the samples. A triangle test, with a forced choice between the samples was employed. Three samples were presented to panelists, two were the same. The thirty-six (36) panelists were then required to determine the sample that is different from the other two. Then, the panelists were asked to comment on the nature of the difference perceived between the odd and the two other samples. The presentation was balanced over six possible combinations and randomized over the whole group of panelists in order to get statistically significant results. Significance level to be determined at an α risk of 5% (Probability p ≤0.05).

### RESULTS:

| N of Subjects | N of Correct responses | (Required for sign. At P=0.05) P value | Significance in this test: |
|---|---|---|---|
| **36** | **14** | **18** | **Not significant** |

### CONCLUSION:

At 95% confidence level, the flavor samples were not perceived as different, indicating that *Decalepis hamiltonii* extract could be used.

### Example 2

In an experiment similar to one conducted above, a vanilla flavoring concentrate (25 fold) at 2 weight was compared to a 2 weight % concentrate at a level of 0.2% of *Decalepis hamiltonii* extract in the formula. The triangle test format was used again and panelist group (4 panelists) could not identify the difference in flavor.

The testing conducted here was conducted at a flavor level that is approximately 10 fold increase over the flavor or concentration of a common flavor.

### Example 3

*Decalepis hamiltonii* roots with a moisture content of about 8 +/- 2% was coarsely powdered and charged into an extractor. Ethyl alcohol was added at a ratio of 2:1 on weight basis. The temperature of the solvent was maintained at 80 +/- 2°C and the hot solvent was continuously circulated for a period of about 6 hours. At the end of 6 hours, heating was stopped and the extract was drained, filtered and stored. The extraction was repeated twice more following the above conditions except for the solvent to root original weight ratio. The ratio for the second and third extraction was maintained at 1.5:1 and 1:1 respectively.

The above 3 extracts were then combined and concentrated under vacuum (50 - 55 -°C and 180 to 200 Torr) to 50% of its original weight. Propylene glycol was then added (4% of the original weight of the *Decalepis hamiltonii* roots) and then concentration of the extract was continued until the ethyl alcohol was completely removed (25 to 50 PPM ethyl alcohol in the concentrated extract).

The concentrated extract was then analyzed for its actives. The level of the flavor marker chemical, 2-hydroxy-4-methoxy benzaldehyde was adjusted to 2.7 +/- 0.3 % by adjusting the level of Propylene Glycol. Vanillin content of the extract was normally at 0.25+/- 0.05%.

### Example 4 (not claimed)

A typical high fat ice cream was prepared with one of three flavor systems. The first flavor was a standard category one vanilla flavor composed of a blend of vanilla extracts. This flavor was added to the ice cream at 1%. The second set of ice cream was flavored only with *Decalepis hamiltonii* extract at 50 ppm. The third ice cream was flavored with 0.5% of vanilla flavor with 25 ppm of *Decalepis hamiltonii*

These three ice creams were then given to a trained panel of flavorists and food technologists and ask to rate the samples for hedonic liking and vanilla intensity. The preferred sample was the ice cream containing the blend of vanilla extract and *Decalepis hamiltonii.* The ice cream containing the blend of vanilla extracts and *Decalepis hamiltonii* was considered to be stronger in vanilla profile and was considered the most creamy of the samples.

### Example 5

An imitation vanilla extract was prepared using *Decalepis hamiltonii* extract and natural vanillin obtained from lignin. This preparation was compared to commercially available imitation vanilla extract. The two extracts were compared to a standard single fold vanilla extract in sugar water and in sweetened milk. The imitation vanilla extract containing the *Decalepis hamiltonii* extract was considered to be closer in flavor profile to the pure vanilla extract, with more of the pruney, beany character of the vanilla extract than was present in the commercially available artificial vanilla extract.

### Example 6

A commercially available unflavored soymilk was flavored with either pure vanilla extract at 0.5% or with a blend of *Decalepis hamiltonii* extract at 100 ppm and vanilla extracts 0.25%. A panel of flavorists and food technologists were given the two samples and ask to hedonically rate them for liking as well as to describe the level of off-notes typically described in soymilks, such as the notes typically referred to as "beany", astringent, or bitter. The panel preferred the soymilk flavored with the blend of vanilla extract and *Decalepis hamiltonii* and found that this sample had less of the soy "beany" taste.

### Example 7 (not claimed)

Sugar cookies were prepared according to a standard formulation. To one batch of cookies a typical vanilla extract was added, to another vanillin was used in place of the vanilla extract. A third batch of cookies were flavored using only *Decalepis hamiltonii* extract. The three batches of cookies were then baked at 350 degrees for 15 minutes.

The baked cookies were given to a trained panel for evaluation and asked to rate for hedonic liking, vanilla intensity and profile. The panel found the cookies flavored with *Decalepis hamiltonii* to have the most intensive vanilla profile, and slightly preferred these cookies over the cookies prepared with the vanilla extract. The cookies made with the vanillin only were judged to be the least flavorful of the samples, with little vanilla taste.

## Claims

1. A method of reducing the bitter flavor of a soy-containing product comprising adding an organoleptically effective level of a material selected from the group consisting of 2-hydroxy-4-methoxy benzaldehyde and Decalepis hamiltonii extract.

2. The method of claim 1 wherein the level of 2-hydroxy-4-methoxy benzaldehyde and Decalepis hamiltonii extract is greater than about 0.1 parts per million by weight in the soy-containing product.

3. The method of either of the above claims wherein the level of 2-hydroxy-4-methoxy benzaldehyde is greater than about 0.1 parts per million.

4. The method of any preceding claim wherein the level of 2-hydroxy-4-methoxy benzaldehyde is from about 1 to about 5 parts per million.

5. The method of any preceding claim wherein the product is selected from milk and dairy products, candies, cereals, chocolate containing products, soft drinks and snacks.

6. The method of any preceding claim wherein the level of 2-hydroxy-4-methoxy benzaldehyde is greater than about 100 parts per trillion by weight in the food product.

7. The method of any preceding claim which additionally contains vanilla.

8. The method of any preceding claim wherein the weight ratio of vanilla to 2-hydroxy-4-methoxy benzaldehyde is from about 50:1 to about 20:1.

9. A soy foodstuff comprising in combination vanilla and an organoleptically acceptable amount of 2-hydroxy-4-methoxy benzaldehyde.

10. The combination of claim 9 wherein the level of 2-hydroxy-4-methoxy benzaldehyde is greater than about 0.1 parts per million by weight in the foodstuff.

11. The combination of claim 10, wherein the level of 2-hydroxy-4-methoxy benzaldehyde is from about 1 to about 5 parts per million by weight.

12. The combination of any one of claims 9-11 which is incorporated into a beverage.

13. A method for improving, enhancing or modifying the vanilla flavor of a soy foodstuff through the addition of an organoleptically acceptable amount of Decalepis hamiltonii extract.

14. The method of claim 13 wherein the level of Decalepis hamiltonii extract is greater than about 0.1 parts per million

15. The method of claim 14 wherein the level of Decalepis hamiltonii extract is from about 0.5 to about 50 parts per million.

16. The method of any one of claims 13-15 wherein the flavor is incorporated into a foodstuff selected from the group consisting of soy containing products, milk and dairy products, candies, cereals, soft drinks, chocolate containing products and snacks.

17. A soy foodstuff containing in combination vanilla and an organoleptically acceptable amount of Decalepis hamiltonii.

18. The foodstuff of claim 17 wherein the level of Decalepis hamiltonii extract is greater than about 0.1 parts per million by weight in the foodstuff

19. The foodstuff of either of claims 17-18 wherein the level of Decalepis hamiltonii is from about 0.5 to about 50 parts per million by weight in the foodstuff.

20. The combination of any one of claims 17-19 which is incorporated into a beverage.

## Patentansprüche

1. Verfahren zur Verringerung des bitteren Aromas eines sojahaltigen Produkts, das das Zugeben einer organoleptisch wirksamen Menge eines Materials umfasst, das aus 2-Hydroxy-4-Methoxy-Benzaldehyd und Decalepis Hamiltonii-Extrakt ausgewählt ist.

2. Verfahren nach Anspruch 1, wobei die Menge von 2-Hydroxy-4-MethoxyBenzaldehyd und Decalepis Hamiltonii-Extrakt in dem sojahaltigen Produkt größer ist als etwa 0,1 Teile pro Million, auf das Gewicht bezogen.

3. Verfahren nach einem der obigen Anspruch, wobei die Menge von 2-Hydroxy-4-Methoxy-Benzaldehyd größer als etwa 0,1 Teile pro Million ist.

4. Verfahren nach einem der vorhergehenden Ansprüche, wobei die Menge von 2-Hydroxy-4-Methoxy-Benzaldehyd zwischen ungefähr 1 und etwa 5 Teilen pro Million liegt.

5. Verfahren nach einem der vorhergehenden Ansprüche, wobei das Produkt aus Milch und Molkereiprodukten, Süßigkeiten, Cerealien, schokoladehaltigen Produkten, Softdrinks und Snacks ausgewählt ist.

6. Verfahren nach einem der vorhergehenden Ansprüche, wobei die Menge von 2-Hydroxy-4-Methoxy-Benzaldehyd in dem Nahrungsmittelprodukt größer ist als etwa 100 Teile pro Trillion, auf das Gewicht bezogen.

7. Verfahren nach einem der vorhergehenden Ansprüche, welches zusätzlich Vanille enthält.

8. Verfahren nach einem der vorhergehenden Ansprüche, wobei das Gewichtsverhältnis von Vanille zu 2-Hydroxy-4-Methox- Benzaldehyd zwischen etwa 50:1 und ungefähr 20:1 liegt.

9. Soja-Nahrungsmittel, das eine Kombination von Vanille und einer organoleptisch akzeptablen Menge von 2-Hydroxy-4-Methoxy-Benzaldehyd umfasst.

10. Kombination nach Anspruch 9, wobei die Menge von 2-Hydroxy-4-Methoxy-Benzaldehyd in dem Nahrungsmittel größer ist als etwa 0,1 Teile pro Million, bezogen auf das Gewicht.

11. Kombination nach Anspruch 10, wobei die Menge von 2-Hydroxy-4-Methoxy-Benzaldehyd zwischen 1 und ungefähr 5 Teile pro Million, bezogen auf das Gewicht, liegt.

12. Kombination nach einem der Ansprüche 9 bis 11, welche in ein Getränk eingearbeitet ist.

13. Verfahren zur Verbesserung, Verstärkung oder Modifikation des Vanille-Aromas eines Soja-Nahrungsmittels durch Zugabe einer organoleptisch angenehmen Menge eines Decalepis Hamiltonii-Extrakts.

14. Verfahren nach Anspruch 13, wobei die Menge von Decalepis Hamiltonii-Extrakt größer ist als etwa 0,1 Teile pro Million.

15. Verfahren nach Anspruch 14, wobei die Menge von Decalepis Hamiltonii-Extrakt zwischen etwa 0,5 und ungefähr 50 Teilen pro Million liegt.

16. Verfahren nach einem der Ansprüche 13 bis 15, wobei das Aroma in ein Nahrungsmittel aus der Gruppe eingearbeitet ist, die aus sojahaltigen Produkten, Milch und Molkereiprodukten, Süßigkeiten, Ceralien, Softdrinks, schokoladehaltigen Produkte und Snacks besteht.

17. Soja-Nahrungsmittel, das eine Kombination von Vanille und einer organoleptisch angenehmen Menge von Decalepis Hamiltonii enthält.

18. Nahrungsmittel nach Anspruch 17, wobei die Menge von Decalepis Hamiltonii-Extrakt größer als etwa 0,1 Teile pro Million in dem Nahrungsmittel ist.

19. Nahrungsmittel nach einem der Ansprüche 17 bis 18, wobei die Menge von Decalepis Hamiltonii zwischen etwa 0,5 und ungefähr 50 Teilen pro Million in dem Nahrungsmittel liegt.

20. Kombination nach einem der Ansprüche 17 bis 19, welche in ein Getränk eingearbeitet ist.

## Revendications

1. Procédé pour réduire l'arôme amer d'un produit contenant du soja, comprenant l'addition d'un taux organoleptiquement efficace d'une matière choisie dans le groupe constitué par le 2-hydroxy-4-méthoxy benzaldéhyde et un extrait de *Decalepis hamiltonii.*

2. Procédé selon la revendication 1, dans lequel le taux de 2-hydroxy-4-méthoxy benzaldéhyde et d'extrait de *Decalepis hamiltonii* est supérieur à environ 0,1 partie par million en poids dans le produit contenant du soja.

3. Procédé selon l'une quelconque des revendications ci-dessus, dans lequel le taux de 2-hydroxy-4-méthoxy benzaldéhyde est supérieur à environ 0,1 partie par million.

4. Procédé selon l'une quelconque des revendications précédentes, dans lequel le taux de 2-hydroxy-4-méthoxy benzaldéhyde est d'environ 1 à environ 5 parties par million.

5. Procédé selon l'une quelconque des revendications précédentes, dans lequel le produit est choisi parmi le lait et les produits laitiers, les bonbons, les céréales, les produits contenant du chocolat, les boissons gazeuses et les collations.

6. Procédé selon l'une quelconque des revendications précédentes, dans lequel le taux de 2-hydroxy-4-méthoxy benzaldéhyde est supérieur à environ 100 parties par trillion en poids dans le produit alimentaire.

7. Procédé selon l'une quelconque des revendications précédentes, qui contient de plus de la vanille.

8. Procédé selon l'une quelconque des revendications précédentes, dans lequel le rapport pondéral de la vanille au 2-hydroxy-4-méthoxy benzaldéhyde est d'environ 50:1 à environ 20:1.

9. Produit alimentaire au soja comprenant, en combinaison, de la vanille et une quantité organoleptiquement acceptable de 2-hydroxy-4-méthoxy benzaldéhyde.

10. Combinaison selon la revendication 9, dans laquelle le taux de 2-hydroxy-4-méthoxy benzaldéhyde est supérieur à environ 0,1 partie par million en poids dans le produit alimentaire.

11. Combinaison selon la revendication 10, dans laquelle le taux de 2-hydroxy-4-méthoxy benzaldéhyde est d'environ 1 à environ 5 parties par million en poids.

12. Combinaison selon l'une quelconque des revendications 9 à 11, qui est incorporée dans une boisson.

13. Procédé pour améliorer, accroître ou modifier l'arôme vanille d'un produit alimentaire au soja, par l'addition d'une quantité organoleptiquement acceptable d'extrait de *Decalepis hamiltonii.*

14. Procédé selon la revendication 13, dans lequel le taux d'extrait de *Decalepis hamiltonii* est supérieur à environ 0,1 partie par million.

15. Procédé selon la revendication 14, dans lequel le taux d'extrait de *Decalepis hamiltonii* est d'environ 0,5 à environ 50 parties par million.

16. Procédé selon l'une quelconque des revendications 13 à 15, dans lequel l'arôme est incorporé dans un produit alimentaire choisi dans le groupe constitué par les produits contenant du soja, le lait et les produits laitiers, les bonbons, les céréales, les boissons gazeuses, les produits contenant du chocolat et les collations.

17. Produit alimentaire au soja a contenant, en combinaison, de la vanille et une quantité organoleptiquement acceptable de *Decalepis hamiltonii.*

18. Produit alimentaire selon la revendication 17, dans lequel le taux d'extrait de *Decalepis hamiltonii* est supérieur à environ 0,1 partie par million en poids dans le produit alimentaire.

19. Produit alimentaire selon l'une quelconque des revendications 17 ou 18, dans lequel le taux de *Decalepis hamiltonii* est d'environ 0,5 à environ 50 parties par million en poids dans le produit alimentaire.

20. Combinaison selon l'une quelconque des revendications 17 à 19, qui est incorporée dans une boisson.
